# EUROPEAN PATENT SPECIFICATION

(11) **EP 4 442 438 B1**
(45) Date of publication and mention of the grant of the patent: **31.12.2025**
(21) Application number: 24167334.2
(22) Date of filing: 28.03.2024
(51) Int. Cl.: B29C 65/74, B29C 65/18, B65B 31/04, B65B 61/10, B65B 31/02, B65B 51/14, B29C 65/22, B29L 31/00

(54) **VACUUM PACKAGING MACHINE**
VAKUUMVERPACKUNGSMASCHINE
MACHINE D'EMBALLAGE SOUS VIDE

(30) Priority: 03.04.2023 IT 202300006462
(43) Date of publication of application: 09.10.2024
(73) Proprietor: Salvaro, Marziano, 37024 Negrar (Prov. of Verona) (IT)
(72) Inventor: Salvaro, Marziano, 37024 Negrar (Prov. of Verona) (IT)
(74) Representative: Modiano, Micaela Nadia

(56) References cited:
- US-A- 5 239 808
- US-A1- 2015 027 089
- US-B2- 8 099 931

## Description

The present invention relates to a vacuum packaging machine.

Vacuum packaging machines are known which make it possible to package products of various kinds and, in particular, foods, in a wrapper, such as a bag or a pouch, inside which the vacuum has been created, in order to enable an optimal conservation of the products.

In particular, packaging machines of the "bell" type are known, which generally have a base structure, which defines a packaging chamber or vacuum chamber, which can be closed in an upward region by a lid, hinged to the base structure and substantially bell-shaped, and which is designed to receive at least one wrapper, constituted for example by a sealable pouch, in which the food to be packaged has been placed.

The packaging chamber is connected to vacuum generation means, constituted typically by a vacuum pump capable of creating the at least partial vacuum inside the vacuum chamber, once its lid is closed, so as to extract the air from the pouch, with the food inserted in it, placed in the packaging chamber.

In the packaging chamber means for sealing the pouch are moreover provided, which make it possible to hermetically close the pouch substantially at its inlet, once the vacuum is created inside it, by way of heat-sealing its opposite free flaps along two heat-sealing lines produced as a consequence of heating and compressing the flaps to be heat-sealed.

Typically, the means for sealing are constituted by at least one heat-sealing or welding bar, which cooperates with an abutment element, constituted by a sealing contrast bar, directed toward the heat-sealing bar and normally called, in the jargon, silicone holding contrast bar.

The heat-sealing bar can be moved, with respect to the contrast bar, by means of the action of piston-operated movement means, so as to move the heat-sealing bar away from the contrast bar, in order to be able to insert the flaps to be sealed of the pouch between the heat-sealing bar and the contrast bar and extract them from the heat-sealing bar and from the contrast bar, once the flaps are heat-sealed to each other, and so as to bring the heat-sealing bar and the contrast bar closer together, after inserting the flaps to be heat-sealed between them, in order to clamp the flaps to be heat-sealed of the pouch between the heat-sealing bar and the contrast bar.

In particular, the sealing contrast bar is usually arranged above the heat-sealing bar and is typically connected to the lid in a position that is substantially opposite to the end of the lid that is hinged to the base structure, while the heat-sealing bar is supported by the base structure and can be moved vertically, with respect to the base structure, by means of a pair of linear actuators, constituted by actuation pistons, which act on two points of the heat-sealing bar spaced apart from each other along the longitudinal extension of the heat-sealing bar.

The heat-sealing bar and the contrast bar have respective flat covering surfaces which are brought into contact with the flaps to be heat-sealed of the pouch, following the lifting of the heat-sealing bar by the two actuation pistons.

Two longitudinally-extended heating elements or electric resistances, of material and shape designed especially to optimize the localized transmission of heat and the shape characteristics of the heat-sealing, are arranged inside the heat-sealing bar, along its entire length and below the covering surface.

The two electric resistances extend linearly along mutually parallel directions and are mutually spaced apart by an optimal value in order to optimize the characteristics of the heating and sealing of the pouch.

Basically, to execute the hermetic closure of the pouch, the film of plastic material that constitutes one of the two flaps of the pouch is laid on the covering surface of the heat-sealing bar, and the two flaps of the pouch to be heat-sealed are compressed together and superheated, following the raising of the heat-sealing bar and the activation of the electric resistances inside it, until the heat-sealing of the flaps of the pouch is obtained for their full width.

Usually, the heat-sealing of the pouch is executed at a given distance from its inlet, with the result that, once the heat-sealing has been executed, a strip of greater or lesser breadth of the pouch, arranged between the heat-sealing and its inlet, remains attached to the pouch.

This residual, unsealed strip of the pouch is useless and cumbersome and can give rise to bacterial proliferation, if the necessary hygienic precautions are not adopted.

In fact, in the daily practice of food vacuum packaging, it often happens that this strip can be smeared internally or at its free ends, by particles of the food placed inside the pouch.

The need is therefore felt to be able to cut off the residual strip of pouch after it has been heat-sealed.

For this reason, one of the resistances in the heat-sealing bar, in particular the one intended to act in the region of the pouch closest to the inlet of the pouch, is configured to be able to execute the cutting of the pouch by superheating it.

However, the two electric resistances placed in the heat-sealing bar are, currently, both connected to the same electric connector, through the stem of one of the two pistons for actuating the lower heat-sealing bar.

As a consequence, when they are activated, the two electric resistances of the heat-sealing bar are powered to the same electric voltage and for the same length of time.

This structuring of the heat-sealing bar entails a number of drawbacks.

In fact, with this structuring it is not possible to simultaneously execute the heat-sealing and the cutting of the pouch.

Furthermore, with the current structuring, the heat-sealing bar is capable of executing a very thin heat-sealing of the pouch, which can be critical for the vacuum seal if pouches are used having different thickness and materials than those for which the heat-sealing bar was originally designed and configured.

US5239808 A discloses a vacuum packaging machine having a sealing bar with two sealing wires, the sealing bar movable by a piston and cylinder assembly. US2015/027089 A1 discloses a vacuum packaging machine having two heat sealing elements which can be energised independently to different temperatures and for different times. US8099931 B2 discloses yet another vacuum packaging machine.

The aim of the present invention is to provide a vacuum packaging machine which is capable of overcoming the drawbacks of the known art in one or more of the above-mentioned aspects.

Within this aim, an object of the invention is to provide a vacuum packaging machine that is capable of optimizing the performance of heat-sealing and cutting of the pouch into which the foods to be vacuum packaged are placed.

Another object of the invention is to provide a vacuum packaging machine that enables the simultaneous execution of the heat-sealing and of the cutting of pouches.

A further object of the invention is to provide a vacuum packaging machine that makes it possible to provide an optimal heat-sealing.

Another object of the invention is to devise a vacuum packaging machine that is capable of offering the highest guarantees of reliability and safety in its operation.

Another object of the invention is to provide a vacuum packaging machine that in terms of construction is simple to provide.

A further object of the present invention is to overcome the drawbacks of the prior art in an alternative manner to any existing solutions.

Another object of the invention is to provide a vacuum packaging machine that is also competitive from a purely economic viewpoint.

This aim and these and other objects which will become more apparent hereinafter are achieved by a vacuum packaging machine according to claim 1, optionally provided with one or more of the characteristics of the dependent claims.

Further characteristics and advantages of the invention will become better apparent from the detailed description that follows of a preferred, but not exclusive, embodiment of the vacuum packaging machine according to the invention, which is illustrated for the purposes of non-limiting example in the accompanying drawings wherein:

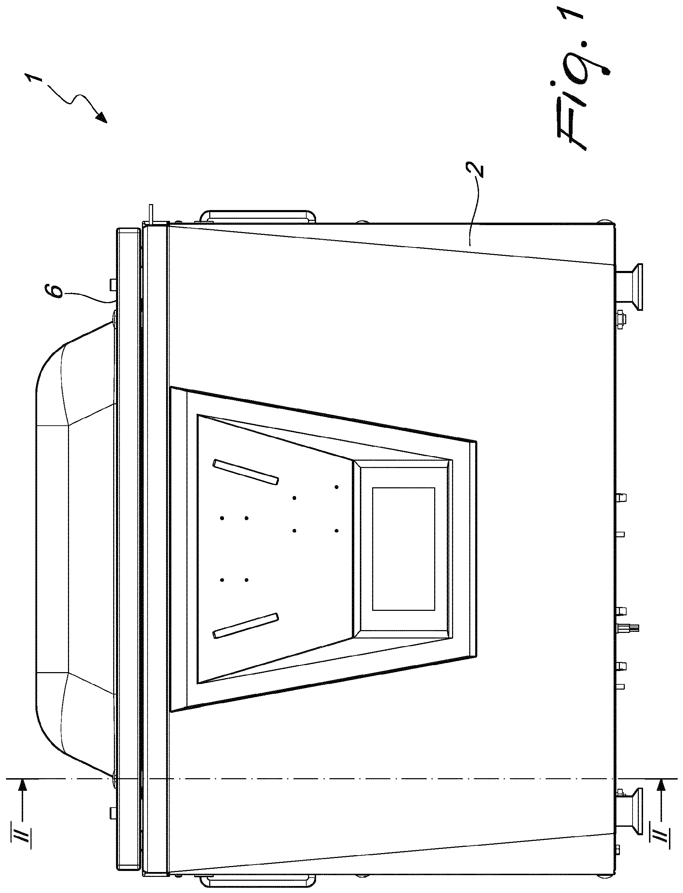

Figure 1 is a front elevation view of a vacuum packaging machine according to the invention;
Figure 2 is a cross-sectional view taken along the line II-II of Figure 1;

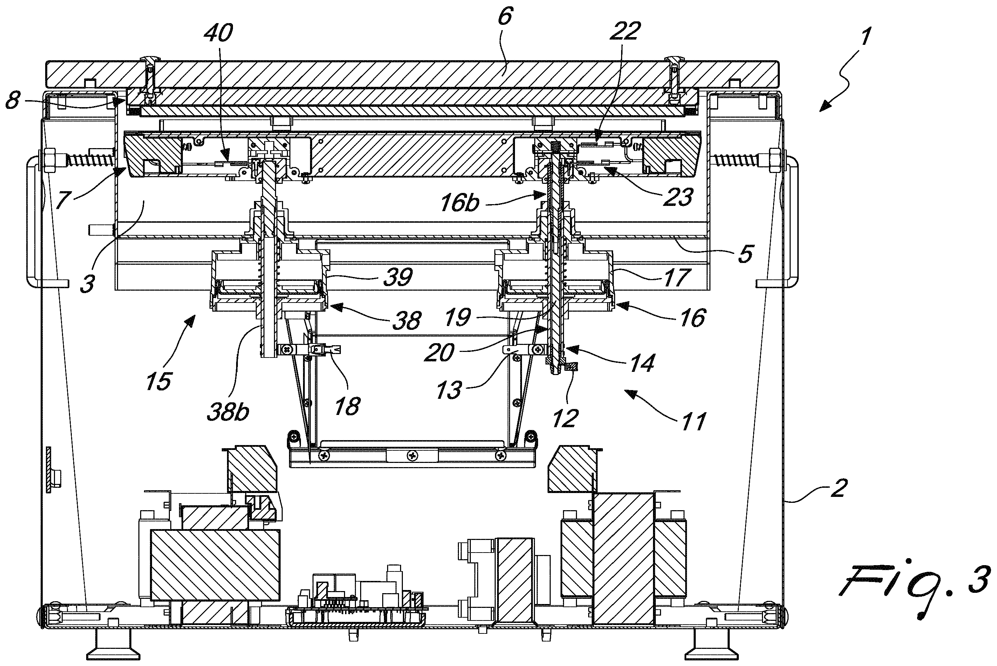

Figure 3 is a cross-sectional view taken along the line III-III in Figure 2;

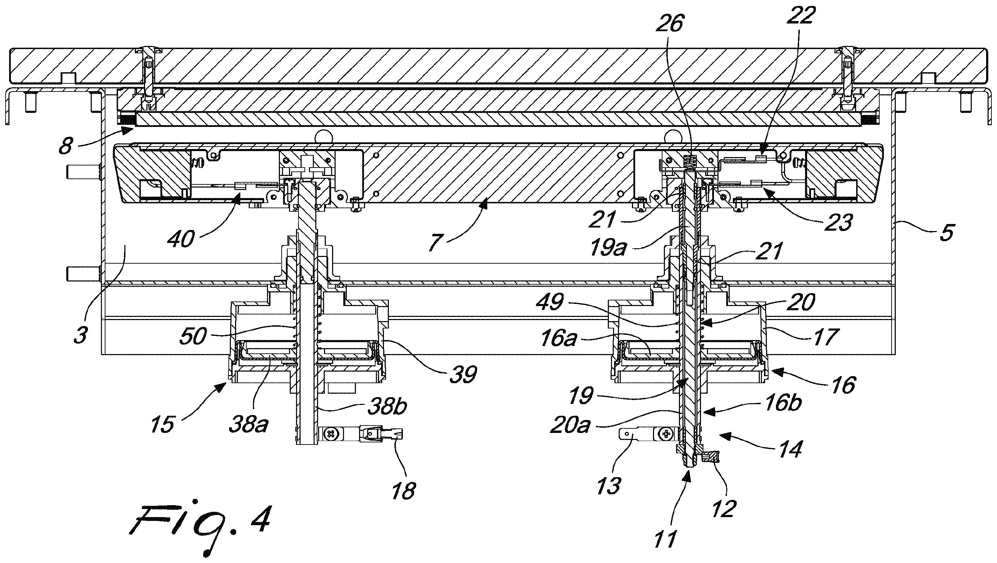

Figure 4 is an enlarged-scale view of a detail of Figure 3;

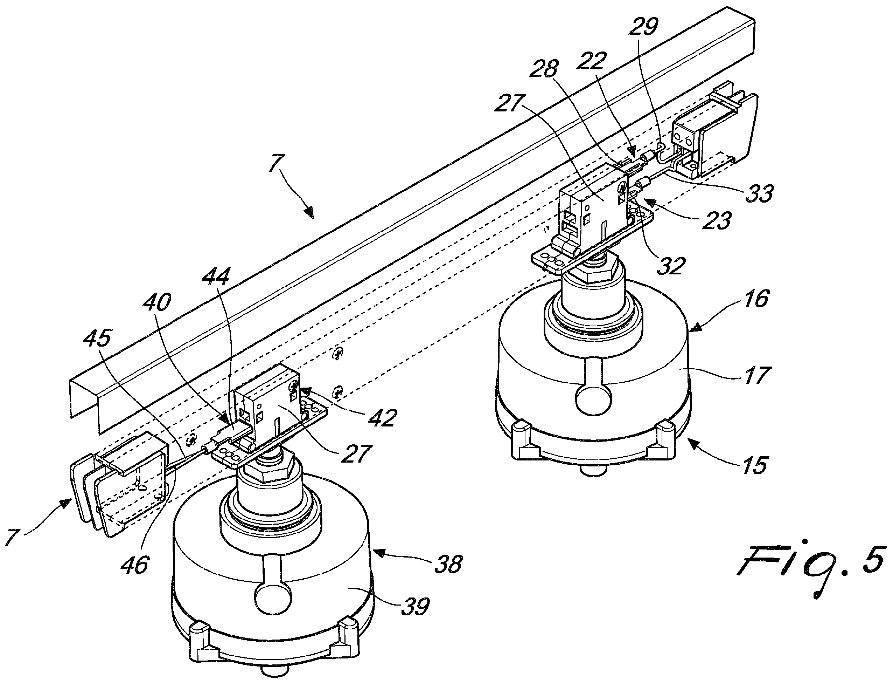

Figure 5 is a partially exploded perspective view of a heat-sealing bar of the vacuum packaging machine according to the invention with the corresponding linear actuators, and with some parts shown transparent and others omitted for the sake of simplicity;

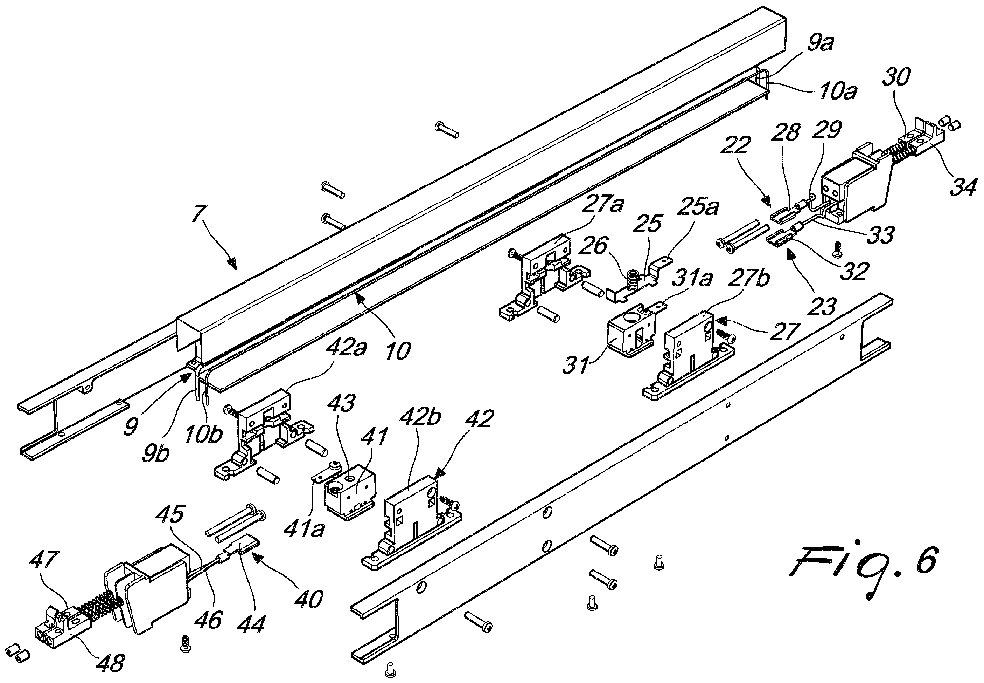

Figure 6 is an exploded perspective view of the heat-sealing bar of Figure 5;

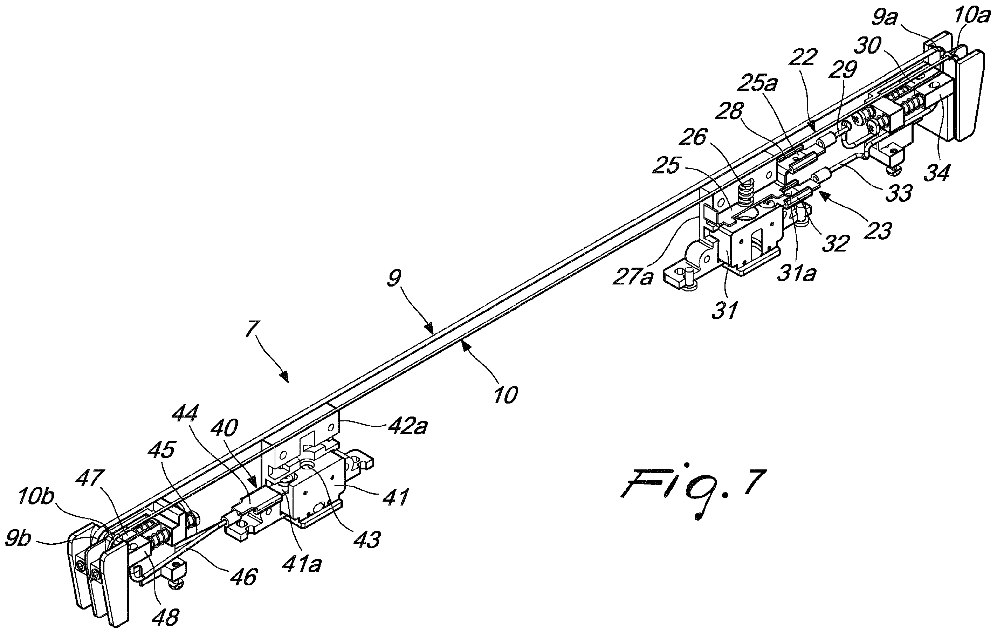

Figure 7 is a perspective view of some components of the heat-sealing bar of Figure 5;

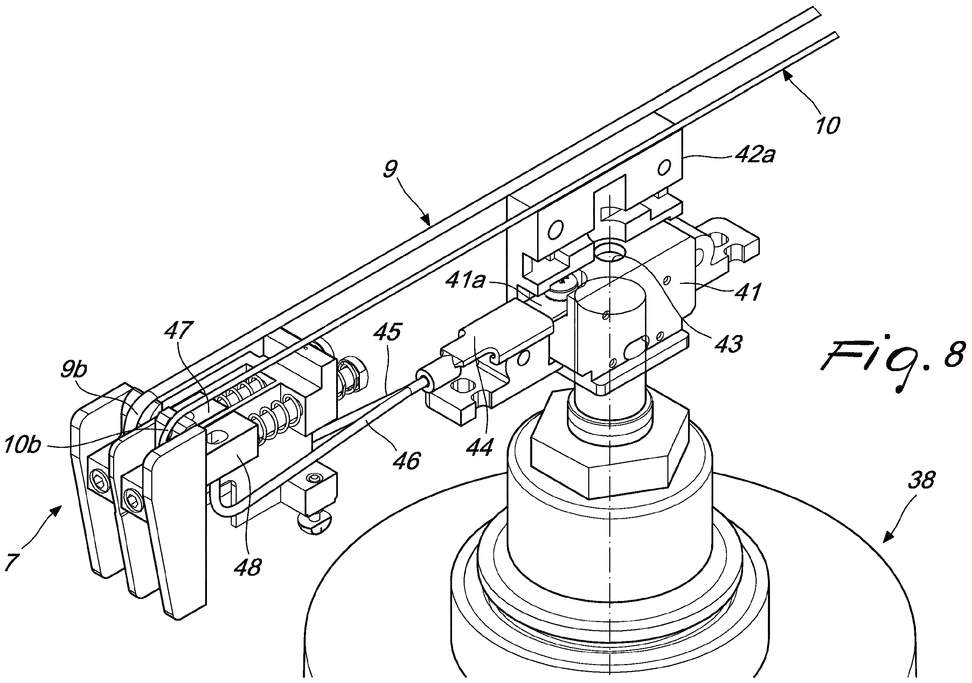

Figure 8 shows a detail in enlarged scale of Figure 7;

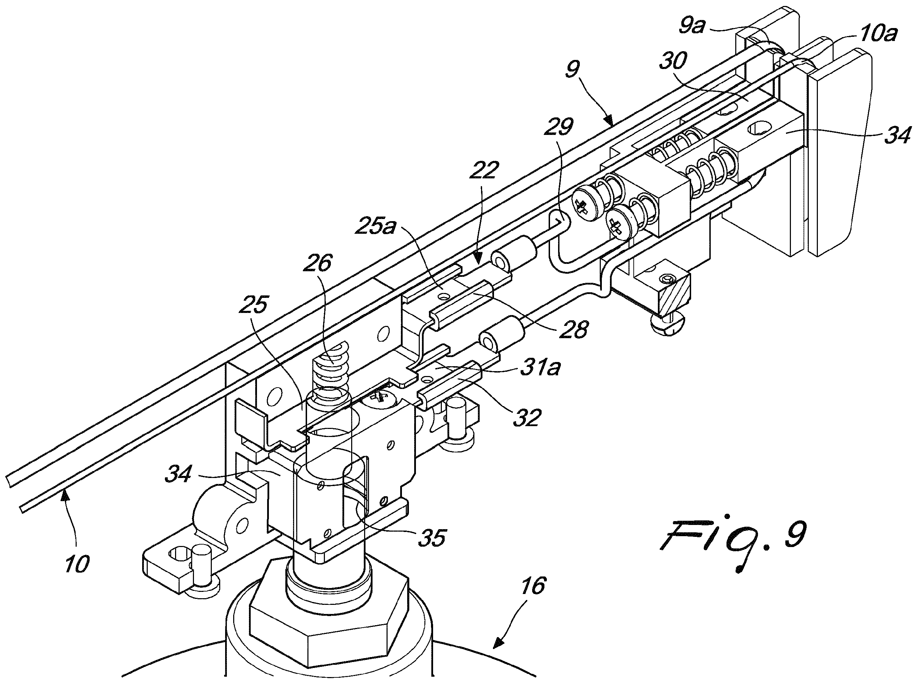

Figure 9 illustrates another detail in enlarged scale of Figure 7;

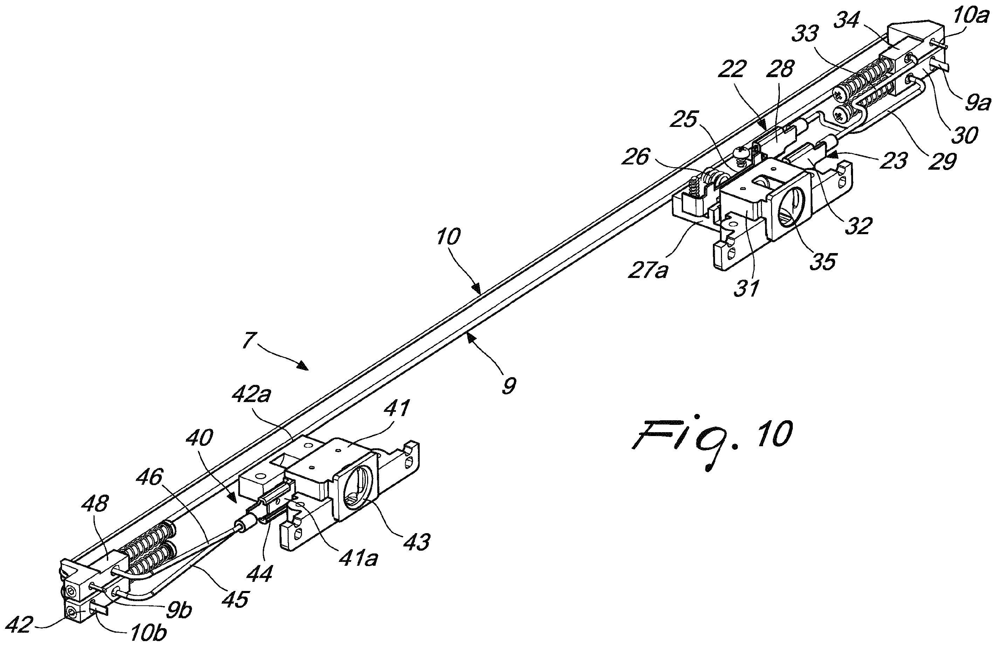

Figure 10 is a perspective view from another angle of the components of Figure 7;

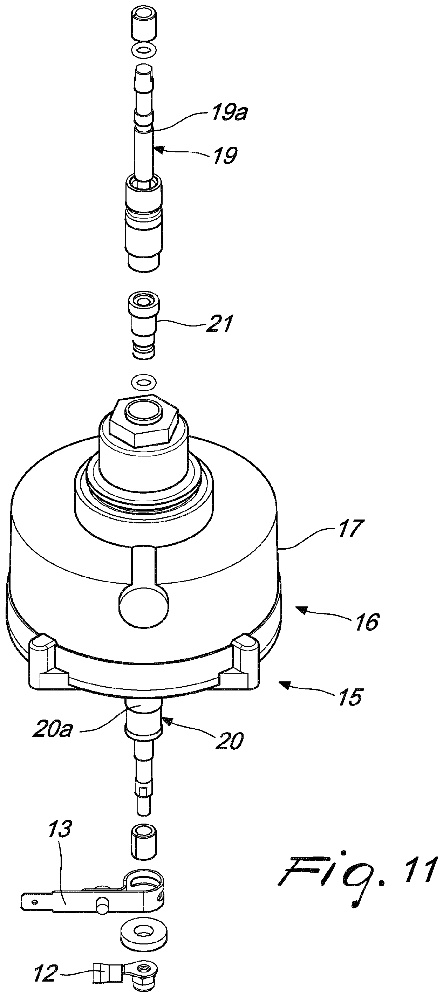

Figure 11 is a partially exploded perspective view of a first linear actuator of the heat-sealing bar of Figure 5;

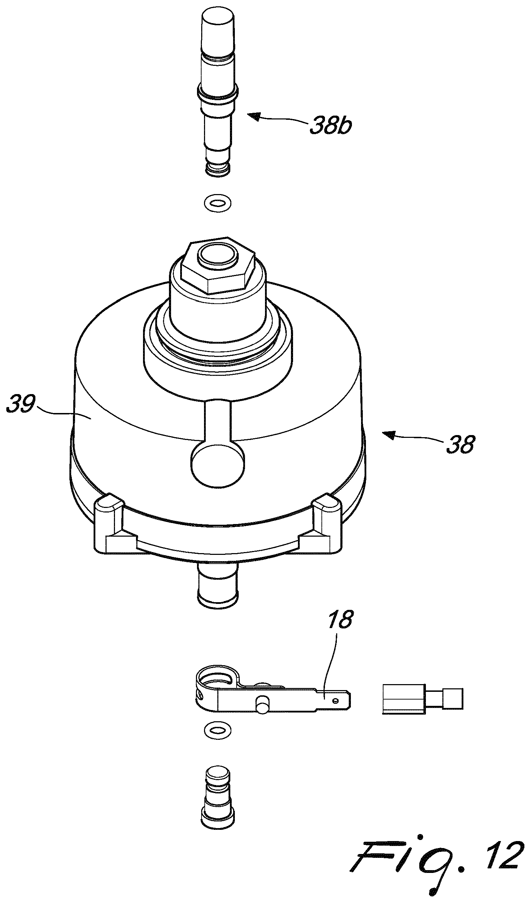

Figure 12 is a partially exploded perspective view of a second linear actuator of the heat-sealing bar of Figure 5.

With reference to the figures, the vacuum packaging machine according to the invention, generally designated by the reference numeral 1, comprises a base structure 2, which defines a packaging chamber 3 which is configured to receive a sealable wrapper 4, such as, for example, a bag or a pouch, made of sealable material, designed to contain one or more products to be vacuum packaged, such as, for example, foods or the like.

The packaging chamber 3 can be, for example, defined by a tub 5, which is mounted on the base structure 2 and which can be closed in an upward region by means of a lid 6, which is hinged, conveniently, at one of its ends, to the base structure 2 and presents, optionally, a typical bell shape.

Inside the packaging chamber 3, at least one heat-sealing bar 7 and at least one contrast bar 8 are arranged, which cooperate with each other, face each other, and are, advantageously, arranged in a peripheral region of the packaging chamber 3.

In particular, with reference to the embodiment illustrated, the (or each) heat-sealing bar 7 is arranged in a lower region, with respect to the respective contrast bar 8, and is supported by the base structure 2, while the respective contrast bar 8 is conveniently connected to the lid 6.

More specifically, the heat-sealing bar 7 can move on command with respect to the contrast bar 8, between an inactive position, in which the heat-sealing bar 7 and the contrast bar 8 are mutually spaced apart, in order to allow the insertion, between the heat-sealing bar 7 and the contrast bar 8, of opposite flaps to be heat-sealed of the wrapper 4 and in order to allow, as a consequence, the sealing thereof, and an active position, in which they are brought mutually close together, in order to allow the compression of the flaps to be heat-sealed of the wrapper 4 between the heat-sealing bar 7 and the contrast bar 8 and therefore allow the execution of the mutual heat-sealing of the two flaps and the consequent sealing of the wrapper 4.

With reference to the embodiment illustrated, the heat-sealing bar 7 is mounted on the base structure 2 with the ability to be moved, with respect to the base structure, in a substantially vertical direction, so that it can be raised, so as to bring it closer to the contrast bar 8, once the lid 6 is closed, bringing the heat-sealing bar 7 and the contrast bar 8 accordingly to the active position, or so that it can be lowered, so as to move it away from the contrast bar 8, bringing the heat-sealing bar 7 and the contrast bar 8 accordingly to the inactive position.

The heat-sealing bar 7 comprises at least two electric resistances 9 and 10, more precisely at least one first electric resistance indicated with 9 and at least one second electric resistance indicated with 10, which are substantially arranged mutually parallel and spaced apart and which extend longitudinally along the extension of the heat-sealing bar 7, so as to affect, with their action, two longitudinal regions, located mutually spaced apart along a substantially horizontal plane, of the heat-sealing surface of the heat-sealing bar 7, intended to come into contact with the wrapper 4.

In particular, each one of the electric resistances 9 and 10 is provided by a respective electrical conducting element of elongated shape and is provided with a predefined electric resistance.

At least one of the electric resistances, more precisely the electric resistance situated in the position designed to be closest to the inlet of the wrapper 4, which, in the embodiment illustrated, corresponds to the second electric resistance 10, is configured to allow not only the heat-sealing but also the execution of the cutting of the wrapper 4.

The machine according to the invention comprises means for independent electric power supply 11 of the electric resistances 9, 10. In particular, such means for independent power supply 11 are configured to allow the electric power supply of each one of the electric resistances 9 and 10 independently of each other.

Advantageously, the means for independent electric power supply 11 comprise at least two separate electrical input connectors 12 and 13, in particular one for each electric resistance 9, 10 present in the heat-sealing bar 7, and each one is configured to supply electric power to the corresponding electric resistance 9, 10.

More precisely, there is at least one first electrical input connector 12, configured to supply electric power to the first electric resistance 9, and at least one second electrical input connector 13, configured to supply electric power to the second electric resistance 10.

The means for independent electric power supply 11 further comprise means for independent electrical connection 14 of each one of the electric resistances 9 and 10 to the respective electrical input connector 12 and 13.

In particular, each electrical input connector 12 and 13 is electrically connected, or connectable, to a source of electricity, such as, for example, a mains supply, preferably by virtue of the interposition of an electric voltage transformer, not shown, to a first pole or terminal connector to which both of the electrical input connectors 12 and 13 are connected.

Conveniently, the electric voltage transformer is controlled by an electronic power controller, not shown, which makes it possible to manage the electric power supply to the electric resistances 9 and 10 through the two electrical input connectors 12 and 13.

In more detail, it should be noted that the heat-sealing bar 7 can be moved, with respect to the contrast bar 8, by means of movement means 15 which comprise, conveniently, at least one first linear actuator 16.

In particular, the first linear actuator 16 is provided with a respective actuation piston 16a, mounted so that it can slide within a first actuation cylinder 17 and functionally connected to the heat-sealing bar 7 by way of a respective stem 16b.

Advantageously, the means for independent electrical connection 14 substantially extend, at least partially, along the stem 16b of the first linear actuator 16.

In particular, the means for independent electrical connection 14 are configured to electrically connect, independently, each one of the electrical input connectors 12 and 13 substantially to a first end 9a, 10a of the respective electric resistance 9 and 10.

Conveniently, substantially at a second end 9b, 10b thereof, opposite to the above-mentioned first end 9a, 10a, both the electric resistances 9, 10 are instead electrically connected to a single electrical output connector 18, common to both the electric resistances 9 and 10, as will be explained below.

In further detail, the stem 16b of the first linear actuator 16 comprises, advantageously, at least two electrically conducting portions 19 and 20, which are electrically isolated from each other, and more precisely at least one first electrically conducting portion, generally designated with the reference numeral 19, and at least one second electrically conducting portion, in turn generally designated by the reference numeral 20.

In particular, the first electrically conducting portion 19 is connected electrically to one of the two electrical input connectors and to one of the electric resistances and, more specifically, it is electrically connected to the first electrical input connector 12 and to the first electric resistance 9, while the second electrically conducting portion 20 of the stem 16b is electrically connected to the other electrical input connector and to the other electric resistance and, more precisely, to the second electrical input connector 13 and to the second electric resistance 10.

In this manner, the stem 16b of the first linear actuator 16, by virtue of the fact that it comprises at least two electrically conducting portions 19 and 20 that are electrically isolated from each other, is capable of carrying two separate electric power supplies for the electric resistances 9 and 10 of the heat-sealing bar 7, one for the electric resistance that enables execution of the heat-sealing of the wrapper 4, i.e. the electric resistance 9, and one for the electric resistance that makes it possible to execute the heat-sealing or the cutting of the wrapper 4, i.e. the electric resistance 10, so as to allow an independent electric power supply of the electric resistances 9 and 10.

Conveniently, the first electrically conducting portion 19 of the stem 16b substantially extends along the axis of the stem 16b, while the second electrically conducting portion 20 of the stem 16b is arranged coaxially around to the first electrically conducting portion 19.

More specifically, according to the embodiment shown, the first electrically conducting portion 19 of the stem 16b is constituted by at least one central rod-like body 19a made of conducting material, which extends along the axis of the stem 16b. The second electrically conducting portion 20 of the stem 16b, on the other hand, is provided by at least one sleeve-like body 20a made of conducting material, arranged around the central rod-like body 19a.

Interposed between the first electrically conducting portion 19 and the second electrically conducting portion 20, at least one electrically insulating body is conveniently provided, which is constituted, for example, by at least one electric insulation bushing 21, arranged between the central rod-like body 19a and the sleeve-like body 20a.

It should be noted that both the sleeve-like body 20a and the central rod-like body 19a can be made in one or more pieces that can be mutually assembled, for example with a threaded connection.

Preferably, at least one of the pieces that make up the central rod-like body 19a, in particular at least one piece designed to remain, at least partially, in a protruding position with respect to the actuation cylinder 17, can be substituted during the construction of the machine with another of a different length, so as to allow for the possibility of varying the length of the stem 16b in a very convenient manner, by adapting its measurements to the size or version of the machine.

Conveniently, the electrically conducting portions 19 and 20 of the stem 16b are, furthermore, each electrically connected to at least one respective electrical input contact element 22 and 23, which is integral with the heat-sealing bar 7 and electrically connected to a corresponding electric resistance 9, 10.

More specifically, the first electrically conducting portion 19 of the stem 16b is connected to at least one first electrical input contact element 22, which in turn is electrically connected to the first electric resistance 9, while the second electrically conducting portion 20 of the stem 16b is connected to at least one second electrical input contact element 23, which is different, i.e. electrically isolated, from the first electrical contact element 22 and which is instead electrically connected to the second electric resistance 10.

Advantageously, as in the embodiment shown, the first electrically conducting portion 19 of the stem 16b is electrically connected, at one axial end thereof, to the corresponding electrical input connector 12, while, at the other axial end thereof, it is in contact with an electrically conducting electrical contact plate 25, which is elastically loaded, by means of a spring 26, against the first electrically conducting portion 19.

Conveniently, the electrical contact plate 25 is accommodated in a first box-like electrically-insulating body 27, which is integrally supported by the heat-sealing bar 7 and which is, advantageously, composed of a pair of shells 27a and 27b which are assembled together by means of screws or the like.

The contact plate 25 is elastically pushed by the spring 26, so that a face thereof remains in contact against the end of the central rod-like body 19a that is directed toward the heat-sealing bar 7, and is connected, with an electrical connection portion 25a thereof, suitably positioned outside the first box-like electrically-insulating body 27, with the first electrical input contact element 22, which, advantageously, comprises a first snap-fit electrical connector 28 which is coupled with the electrical connection portion 25a of the contact plate 25.

In turn, the first snap-fit electrical connector 28 is, conveniently, connected, by means of a first electric cable 29, to the first electric resistance 9, by means of, for example, a first electrical terminal connector 30, to which the first end 9a of the first electric resistance 9 is connected, so as to obtain the electrical connection between the first electric cable 29 and the first electric resistance 9.

The second electrically conducting portion 20 of the stem 16b is, on the other hand, connected, at an axial end thereof, to the corresponding electrical input connector 13, and, substantially at the opposite axial end thereof, is in a relationship of electrical contact with a first connector block 31, made of an electrically conductive material, which is integral with the heat-sealing bar 7 and is passed through with play, i.e. without electrical contact, by the first electrically conducting portion 19.

Advantageously, the first connector block 31 is also accommodated in the first box-like electrically-insulating body 27 and has, conveniently, a connecting tab 31a, accessible from outside the first box-like electrically-insulating body 27, which allows its connection to the second electrical input contact element 23, which comprises, conveniently, a second snap-fit electrical connector 32, which is coupled to the connecting tab 31a of the first connector block 31.

In particular, the second snap-fit electrical connector 32 is connected to the second electric resistance 10, for example by means of a second electric cable 33, which is, conveniently, connected to a second electrical terminal connector 34, electrically separate from the first electrical terminal connector 30, to which the first end 10a of the second electric resistance 10 is also connected, so as to obtain the electrical connection between the second electric cable 33 and the second electric resistance 10.

In more detail, the first connector block 31 is arranged so as to face, with one of its sides, toward the face of the contact plate 25 that is designed to remain in contact with the central rod-like body 19a of the stem 16b and is provided with a first passage 35 which is axially passed through, so that it can slide axially, by the stem 16b.

The first passage 35 is, in particular, configured to have greater transverse dimensions than the diameter of the central rod-like body 19a of the stem 16b, so that it can be passed through axially by the central rod-like body 19a of the stem 16b, without the possibility that the central rod-like body 19a of the stem 16b could come into contact with the first connector block 31, so that there is no electrical continuity between the first electrically conducting portion 19 of the stem 16b and the first connector block 31.

The first passage 35 is furthermore perimetrically delimited, at least partially, by at least one portion of wall which is in contact, with the ability to slide, with the sleeve-like body 20a of the stem 16b, so as to ensure electrical continuity between the second electrically conducting portion 20 of the stem 16b and the first connector block 31.

Advantageously, the movement means 15 for moving the heat-sealing bar 7, in addition to the first linear actuator 16, also comprise at least one second linear actuator 38, arranged spaced apart from the first linear actuator 16, along the longitudinal axis of the heat-sealing bar 7.

Preferably, to ensure the level movement of the heat-sealing bar 7, the first linear actuator 16 and the second linear actuator 38 are arranged substantially mutually symmetrically, with respect to a central portion of the heat-sealing bar 7, located between its opposite ends.

In detail, the second linear actuator 38 is provided with a respective actuation piston 38a, which is accommodated so that it can slide within a second actuation cylinder 39, and a respective stem 38b which is functionally connected to the heat-sealing bar 7.

Conveniently, the stem 38b of the second linear actuator 38 is electrically conductive and is connected, with at least one portion thereof, in particular with a portion thereof that is proximate to the end thereof that is connected to the heat-sealing bar 7, to the second end 9b, 10b of both of the electric resistances 9 and 10, in order to close of the electrical circuit that powers each one of the electric resistances 9 and 10.

In detail, the stem 38b of the second linear actuator 38 is constituted by a rod-like element and is electrically connected to the second end of both of the electric resistances 9 and 10 by means of the interposition **of** a single electrical output contact element 40, integral with the heat-sealing bar 7, to which both of the electric resistances 9 and 10 are connected.

It should be noted that the rod-like element that constitutes the stem 38b of the second linear actuator 38 can be made in multiple longitudinal pieces or portions assembled together, for example by means of threaded connections, of which at least one can be substituted, during construction of the machine, with another of different length, so as to be able to adapt the length of the stem 38b of the second linear actuator 38 as a function of the size or of the version of the machine.

In more detail, the stem 38b of the second linear actuator 38 is in electrical contact with a second block connector 41, made of electrically conductive material, which is arranged inside a second box-like electrically-insulating body 42, which is integrally associated with the heat-sealing bar 7 and conveniently made of two shells 42a, 42b which can be mutually assembled, preferably by means of adapted screws.

The second block connector 41 has a second passage 43 which can be slideably passed through by the stem 38b of the second linear actuator 38.

In particular, the stem 38b of the second linear actuator 38 is in contact with at least one portion of the inner wall of the second passage 43, so as to ensure electrical continuity between the second block connector 41 and the stem 38b of the second linear actuator 38.

Substantially at the opposite end thereof from the end connected to the heat-sealing bar 7, the stem 38b of the second linear actuator 38 is connected electrically to the electrical output connector 18, which is, in turn, connected electrically to a second pole or terminal connector of the electric voltage transformer.

The second block connector 41 is in turn connected to the second end 9b, 10b of both of the electric resistances 9 and 10 by means of the electrical output contact element 40.

In particular, the second block connector 41 is associated with a corresponding electric connecting tab 41a, which is accessible from outside the second box-like electrically-insulating body 41 and which makes it possible to obtain the electrical connection between the second block connector 41 and the electrical output contact element 40.

More specifically, the electrical output contact element 40 comprises a third snap-fit electrical connector 44, which is coupled to the connecting tab of the second block connector 40.

Conveniently, the third snap-fit electrical connector 44 is electrically connected, with an end thereof, to two electrical cables, respectively a third and a fourth electrical cable 45 and 46.

At the opposite end thereof, the third electrical cable 45 is connected to a third electrical terminal connector 47, which is also connected to the second end 9b of the first electric resistance 9, while the fourth electrical cable 46 is connected to a fourth electrical terminal connector 48, which in turn is also connected to the second end 10b of the second electric resistance 10.

For completeness, it must be noted that the packaging chamber 3 is connected, in a manner per se known, to vacuum generation means, which are constituted, conveniently, by a vacuum pump, not shown, which is configured to extract the air from the packaging chamber 3.

Advantageously, the vacuum pump is connected to the first and to the second linear actuator 16 and 38 by means of special valves, so that the air extracted from the packaging chamber 3 can be used to actuate the pistons 16a and 38a of the linear actuators 16, 38, in order to operate the raising of the heat-sealing bar 7.

Conveniently, interposed between the pistons 16a and 38a of the first linear actuator 16 and of the second linear actuator 38 and the corresponding cylinders 17 and 39 are respective elastic return springs 49 and 50 which act against the displacement of the pistons 16a, 38a that results in the raising of the heat-sealing bar 7, under the thrust of the pressure of the air introduced into the cylinders 17 and 39, so as to allow the automatic lowering of the heat-sealing bar 7, once the action of the pressure of the air on the pistons 16a and 38a has ceased.

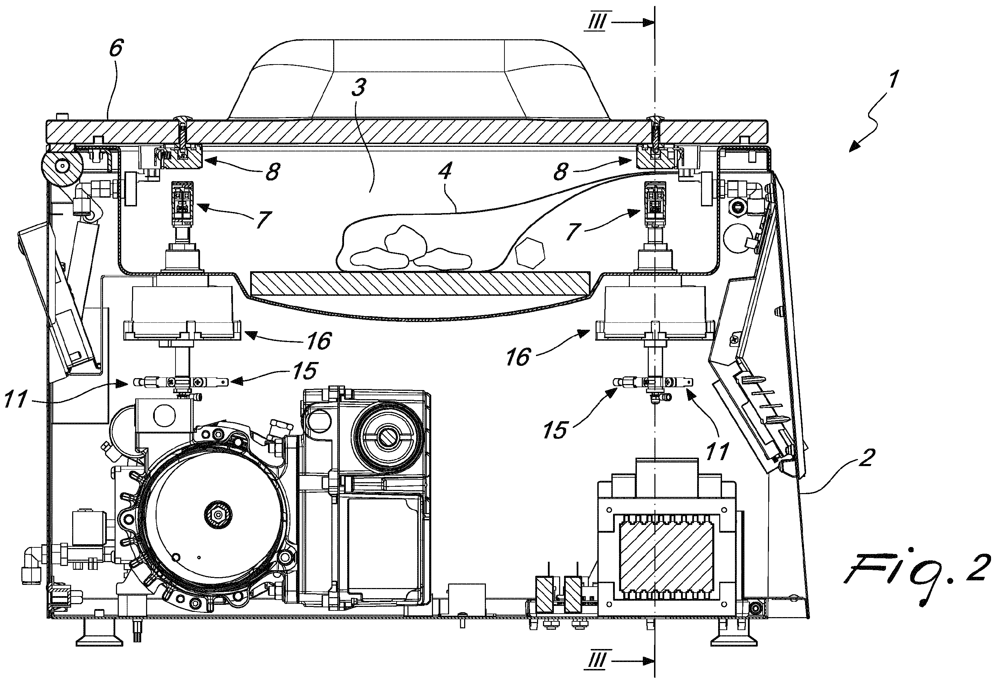

It should also be noted, as shown in Figure 2, that inside the packaging chamber 3 there can optionally be two heat-sealing bars 7 which are arranged, with the respective contrast bars 8, at two opposite ends of the packaging chamber 3.

The operation of the machine, according to the invention, is the following.

A wrapper 4, containing the products to be vacuum packaged, is placed inside the packaging chamber 3 and a portion of the wrapper 4 proximate to its inlet is arranged on the heat-sealing bar 7.

Then the packaging chamber 3 is closed by means of the lid 6 and the vacuum generation means are activated, so as to extract the air from the packaging chamber 3 and, therefore, from the wrapper 4.

Once the desired level of vacuum is obtained, the operator proceeds with the sealing of the wrapper 4.

In particular, the heat-sealing bar 7 is thrust upward by the stems 16b and 38b of the first and of the second linear actuator 16 and 38, so as to bring its heat-sealing surface into contact with the wrapper 4 and the latter in abutment against the contrast bar 8.

The lifting force of the heat-sealing bar 7 is generated using the difference in pressure between the inside of the packaging chamber 3 and the external, atmospheric pressure.

At the command of the electronic power controller, the electrical power supplies to the electric resistances 9 and 10 of the heat-sealing bar 7 are switched on, through the stems 16b and 38b of the linear actuators 16 and 38.

In particular, the voltage transformer powers, with its first pole, the first electrical input connector 12 and the second electrical input connector 13 and the stem 16b of the first linear actuator 16 brings the two separate power supplies of the first and of the second electrical input connector 12 and 13 to the two electric resistances 9 and 10 through its two electrically conducting portions 19 and 20, which are isolated from each other, with the first electrically conducting portion 19 powering the first electric resistance 9 i.e. the electric resistance that makes it possible to execute the heat-sealing of the wrapper 4 and with the second electrically conducting portion 20 powering the second electric resistance 10 i.e. the electric resistance that makes it possible to execute both the cutting and the heat-sealing of the wrapper 4.

The stem 38b of the second linear actuator 38 closes the electrical circuit by connecting the second end 9b, 10b of the electric resistances 9 and 10 to the second pole of the voltage transformer through the electrical output connector 18.

In this manner, the voltage transformer powers the electric resistances 9 and 10 of the heat-sealing bar 7 for a short time.

As a function of the current dispensed and of the dispensing time, the second electric resistance 10 executes the cutting of the wrapper 4 or only the heat-sealing thereof, while the sole function of the first electric resistance 9 is to execute the heat-sealing of the wrapper 4.

Once the heat-sealing of the wrapper 4 has been executed, atmospheric pressure is restored in the packaging chamber 3 and, after the packaging chamber 3 is opened by lifting the lid 6, and the sealed wrapper 4 containing the vacuum-packaged products is removed from the packaging chamber 3.

In practice it has been found that the invention fully achieves the intended aim and objects by providing a vacuum packaging machine that makes it possible to simultaneously handle both the heat-sealing function and the cutting function of wrappers used for vacuum packaging, with considerable simplification of the packaging operations.

Another advantage of the machine according to the invention is that it makes it possible to execute a heat-sealing of packaging wrappers that is capable of positively ensuring the vacuum seal even if the thickness of the wrappers varies and if the wrappers are made from different materials.

Another advantage of the machine according to the invention is that it makes it possible, differently from the prior art, to separately manage the power supply voltage and the heat-sealing time of the heat-sealing bar.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A food vacuum packaging machine, comprising a base structure (2) which defines a packaging chamber (3) configured to receive a sealable wrapper (4) containing the products to be vacuum packaged, inside said packaging chamber (3) there being arranged at least one heat-sealing bar (7) and at least one respective contrast bar (8), which face each other and can move on command, with respect to each other, between an inactive position, in which they are mutually spaced apart, to allow the insertion, between said heat-sealing bar (7) and said contrast bar (8), of opposite flaps to be heat-sealed of said wrapper (4), and an active position, in which they are mutually close together, to allow the compression of said flaps between said heat-sealing bar (7) and said contrast bar (8), said heat-sealing bar (7) comprising at least two electric resistances (9, 10) which are parallel to each other and spaced apart, extending longitudinally along the extension of said heat-sealing bar (7), at least one of said electric resistances (9, 10) being configured to allow the execution of the cutting of said wrapper (4), further comprising means for independent electric power supply (11) to said electric resistances (9, 10) which are configured to supply electric power to each one of said electric resistances (9, 10) independently of each other, said means for independent electric power supply (11) comprising means for independent electrical connection (14) of each one of said electric resistances (8, 9) to a respective electrical input connector (12, 13) configured to supply electric power to the respective electric resistance, said heat-sealing bar (7) being adapted to be actuated in movement, with respect to said contrast bar (8), by virtue of movement means (15) comprising at least one first linear actuator (16), said at least one first linear actuator (16) having an actuation piston (16a) which is functionally connected to said at least one of said heat-sealing bars (7) by means of a respective stem (16b), said means for independent electrical connection (14) extending, at least partly, substantially along said stem (16b), said stem (16b) of said first linear actuator (16) comprising at least two electrically conducting portions (19, 20) which are electrically isolated from each other, respectively at least one first electrically conducting portion (19) and at least one second electrically conducting portion (20), said first electrically conducting portion (19) being electrically connected to one of said electrical input connectors (12, 13) and to one of said electric resistances (9, 10), said at least one second electrically conducting portion (20) of said stem (16b) being electrically connected to the other electrical input connector (12, 13) and to the other electric resistance (9, 10).

2. The vacuum packaging machine according to claim 1, **characterized in that** said means for independent electrical connection (14) are configured to electrically connect each one of said electrical input connectors (12, 13) to a first end (9a, 10a) of the respective electric resistance (9, 10), said electric resistances (9, 10) each being electrically connected, at a second end (9b, 10b), opposite to said first end (9a, 10a), to a single electrical output connector (18).

3. The vacuum packaging machine according to claim 1, **characterized in that** said at least one first electrically conducting portion (19) of said stem (16b) of said first linear actuator (16) extends substantially along the axis of said stem (16b), said at least one second electrically conducting portion (20) being arranged coaxially around said at least one first electrically conducting portion (19).

4. The vacuum packaging machine according to claim 1, **characterized in that** said first electrically conducting portion (19) of said stem (16b) comprises at least one central rod-like body (19a) which extends along the axis of said stem (16b), said second electrically conducting portion (20) of said stem (16b) comprising at least one sleeve-like body (20a) arranged around said central rod-like body (19a).

5. The vacuum packaging machine according to claim 1, **characterized in that** said electrically conducting portions (19, 20) of said stem (16b) are each electrically connected to at least one respective electrical input contact element (22, 23), which is integral with said heat-sealing bar (7) and electrically connected to a corresponding electric resistance (9, 10).

6. The vacuum packaging machine according to claim 1, **characterized in that** said first electrically conducting portion (19) of said stem (16b) is electrically connected, at one axial end thereof, to the corresponding electrical input connector (12, 13) and, at the other axial end thereof, is in contact with an electrically conducting electrical contact plate (25), which is elastically loaded against said first electrically conducting portion (19).

7. The vacuum packaging machine according to claim 1, **characterized in that** said second electrically conducting portion (20) is connected, at one axial end thereof, to the corresponding electrical input connector (12, 13), and is, substantially at the opposite axial end thereof, in a relationship of electrical contact with a first connector block (31), which is integral with said heat-sealing bar (7) and is passed through with play by said first electrically conducting portion (19).

8. The vacuum packaging machine according to claim 2, **characterized in that** said movement means (15) for moving said heat-sealing bar (7) comprise at least one second linear actuator (38) which is arranged spaced apart from said at least one first linear actuator (16) along the axis of said heat-sealing bar (7), said at least one second linear actuator (38) having a respective actuation piston (38a) and a respective stem (38b) which is functionally connected to said heat-sealing bar (7), the stem (38b) of said at least one second linear actuator (38) being electrically conducting and being connected, substantially at one end thereof, to the second end (9b, 10b) of both said electric resistances (9, 10).

## Patentansprüche

1. Eine Lebensmittel-Vakuumverpackungsmaschine, die eine Grundstruktur (2) umfasst, welche einen Verpackungsraum (3) bestimmt, ausgebildet, um eine verschließbare Verpackung (4) aufzunehmen, welche die Produkte enthält, die mit einer Vakuumverpackung zu versehen sind; wobei in dem Verpackungsraum (3) mindestens ein Heißsiegelwerkzeug (7) und mindestens ein dazugehöriges Gegenwerkzeug (8) angeordnet sind, die einander zugewandt sind und sich auf Befehl mit Bezug zueinander zwischen einer inaktiven Position, in der sie voneinander beabstandet sind, um das Einführen gegenüberliegender unter Hitze zu versiegelnder Flügel der Verpackung (4) zwischen dem Heißsiegelwerkzeug (7) und dem Gegenwerkzeug (8) zu ermöglichen, und einer aktiven Position bewegen können, in der sie nahe beieinander sind, um das Zusammendrücken der Flügel zwischen dem Heißsiegelwerkzeug (7) und dem Gegenwerkzeug (8) zu ermöglichen; wobei das Heißsiegelwerkzeug (7) mindestens zwei elektrische Widerstände (9, 10) umfasst, die parallel zueinander und voneinander beabstandet sind und sich in Längsrichtung entlang der Ausdehnung des Heißsiegelwerkzeugs (7) erstrecken, wobei mindestens einer der elektrischen Widerstände (9, 10) konfiguriert ist, um das Schneiden der Verpackung (4) zu ermöglichen, weiter Mittel zur unabhängigen Stromversorgung (11) der elektrischen Widerstände (9, 10) umfassend, die ausgebildet sind, um jedem der elektrischen Widerstände (9, 10) unabhängig von den anderen Strom zuzuführen; wobei die Mittel zur unabhängigen Stromversorgung (11) Mittel für das unabhängige elektrische Anschließen (14) jedes der elektrischen Widerstände (8, 9) an einen entsprechenden elektrischen Eingangsanschluss (12, 13) umfassen, der konfiguriert ist, um den jeweiligen elektrischen Widerstand Strom zuzuführen; wobei das Heißsiegelwerkzeug (7) ausgebildet ist, um von Bewegungsmitteln (15), die mindestens einen ersten Linearaktor (16) umfassen, in einer Bewegung mit Bezug auf das Gegenwerkzeug (8) angetrieben zu werden; wobei der mindestens eine erste Linearaktor (16) einen Steuerkolben (16a) hat, welcher über einen entsprechenden Schaft (16b) funktionell mit dem mindestens einen der Heißsiegelwerkzeuge (7) verbunden ist; wobei die Mittel zum unabhängigen elektrischen Anschließen (14) sich im Wesentlichen zumindest teilweise entlang dem Schaft (16b) erstrecken; wobei der Schaft (16b) des ersten Linearaktors (16) mindestens zwei elektrisch leitende Abschnitte (19, 20) umfasst, die elektrisch voneinander isoliert sind, nämlich mindestens einen ersten elektrisch leitenden Abschnitt (19) und mindestens einen zweiten elektrisch leitenden Abschnitt (20); wobei der erste elektrisch leitende Abschnitt (19) elektrisch mit einem der elektrischen Eingangsanschlüsse (12, 13) und mit einem der elektrischen Widerstände (9, 10) verbunden ist; wobei der mindestens eine zweite elektrisch leitende Abschnitt (20) des Schafts (16b) elektrisch mit dem anderen elektrischen Eingangsanschluss (12, 13) und mit dem anderen elektrischen Widerstand (9, 10) verbunden ist.

2. Die Vakuumverpackungsmaschine gemäß Anspruch 1, **dadurch gekennzeichnet, dass** die Mittel zum unabhängigen elektrischen Anschließen (14) konfiguriert sind, um jeden der elektrischen Eingangsanschlüsse (12, 13) elektrisch mit einem ersten Ende (9a, 10a) des jeweiligen elektrischen Widerstands (9, 10) zu verbinden; wobei die elektrischen Widerstände (9, 10) jeweils an einem zweiten Ende (9b, 10b) gegenüber dem ersten Ende (9a, 10a) elektrisch mit einem einzigen elektrischen Ausgangsanschluss (18) verbunden sind.

3. Die Vakuumverpackungsmaschine gemäß Anspruch 1, **dadurch gekennzeichnet, dass** der mindestens eine erste elektrisch leitende Abschnitt (19) des Schafts (16b) des ersten Linearaktors (16) sich im Wesentlichen entlang der Achse des Schafts (16b) erstreckt, wobei der mindestens eine zweite elektrisch leitende Abschnitt (20) koaxial um den mindestens einen ersten elektrisch leitenden Abschnitt (19) herum angeordnet ist.

4. Die Vakuumverpackungsmaschine gemäß Anspruch 1, **dadurch gekennzeichnet, dass** der erste elektrisch leitende Abschnitt (19) des Schafts (16b) mindestens einen zentralen stabartigen Körper (19a) umfasst, der sich entlang der Achse des Schafts (16b) erstreckt, wobei der zweite elektrisch leitende Abschnitt (20) des Schafts (16b) mindestens einen hülsenartigen Körper (20a) umfasst, der um den zentralen stabartigen Körper (19a) herum angeordnet ist.

5. Die Vakuumverpackungsmaschine gemäß Anspruch 1, **dadurch gekennzeichnet, dass** die elektrisch leitenden Abschnitte (19, 20) des Schafts (16b) jeweils elektrisch mit mindestens einem entsprechenden elektrischen Eingangskontaktelement (22, 23) verbunden sind, welches integral mit dem Heißsiegelwerkzeug (7) und elektrisch mit einem entsprechenden elektrischen Widerstand (9, 10) verbunden ist.

6. Die Vakuumverpackungsmaschine gemäß Anspruch 1, **dadurch gekennzeichnet, dass** der erste elektrisch leitende Abschnitt (19) des Schafts (16b) an einem axialen Ende desselben elektrisch mit dem entsprechenden elektrischen Eingangsanschluss (12, 13) verbunden ist und am anderen axialen Ende desselben in Kontakt mit einem elektrisch leitenden elektrischen Kontaktplättchen (25) steht, welches elastisch gegen den ersten elektrisch leitenden Abschnitt (19) vorgespannt ist.

7. Die Vakuumverpackungsmaschine gemäß Anspruch 1, **dadurch gekennzeichnet, dass** der zweite elektrisch leitende Abschnitt (20) an einem axialen Ende desselben mit dem entsprechenden elektrischen Eingangsanschluss (12, 13) verbunden ist und im Wesentlichen am gegenüberliegenden axialen Ende desselben in einer Beziehung elektrischen Kontakts mit einem ersten Anschlussblock (31) steht, welcher integral mit dem Heißsiegelwerkzeug (7) ist und mit Spiel von dem ersten elektrisch leitenden Abschnitt (19) durchquert wird.

8. Die Vakuumverpackungsmaschine gemäß Anspruch 2, **dadurch gekennzeichnet, dass** die Bewegungsmittel (15) zum Bewegen des Heißsiegelwerkzeugs (7) mindestens einen zweiten Linearaktor (38) umfassen, der entlang der Achse des Heißsiegelwerkzeugs (7) beabstandet von dem mindestens einen ersten Linearaktor (16) angeordnet ist, wobei der mindestens eine zweite Linearaktor (38) einen entsprechenden Antriebskolben (38a) und einen entsprechenden Schaft (38b) hat, der funktionell mit dem Heißsiegelwerkzeug (7) verbunden ist; wobei der Schaft (38b) des mindestens einen zweiten Linearaktors (38) elektrisch leitend und im Wesentlichen an einem Ende desselben mit dem zweiten Ende (9b, 10b) beider elektrischer Widerstände (9, 10) verbunden ist.

## Revendications

1. Machine d'emballage sous vide pour aliments, comprenant une structure de base (2) qui définit une chambre d'emballage (3) configurée pour recevoir une enveloppe scellable (4) contenant les produits à emballer sous vide, à l'intérieur de ladite chambre d'emballage (3) étant disposées au moins une barre de thermoscellage (7) et au moins une barre de contraste respective (8), qui se font face et peuvent se déplacer sur commande, l'une par rapport à l'autre, entre une position inactive, dans laquelle elles sont mutuellement espacées, pour permettre l'insertion, entre ladite barre de thermoscellage (7) et ladite barre de contraste (8), des rabats opposés à thermosceller dudit emballage (4), et une position active, dans laquelle elles sont mutuellement rapprochées, pour permettre la compression desdits rabats entre ladite barre de thermoscellage (7) et ladite barre de contraste (8), ladite barre de thermoscellage (7) comprenant au moins deux résistances électriques (9, 10) qui sont parallèles l'une à l'autre et espacées l'une de l'autre, s'étendant longitudinalement le long de l'extension de ladite barre de thermoscellage (7), au moins l'une desdites résistances électriques (9, 10) étant configurée pour permettre l'exécution de la découpe dudit emballage (4), comprenant en outre des moyens d'alimentation électrique indépendante (11) vers lesdites résistances électriques (9, 10) qui sont configurés pour fournir de l'énergie électrique à chacune desdites résistances électriques (9, 10) indépendamment les unes des autres, lesdits moyens d'alimentation électrique indépendante (11) comprenant des moyens de connexion électrique indépendante (14) de chacune desdites résistances électriques (8, 9) à un connecteur d'entrée électrique respectif (12, 13) configuré pour fournir de l'énergie électrique à la résistance électrique respective, ladite barre de thermoscellage (7) étant adaptée pour être actionnée en mouvement, par rapport à ladite barre de contraste (8), grâce à des moyens de déplacement (15) comprenant au moins un premier actionneur linéaire (16), ledit au moins un premier actionneur linéaire (16) ayant un piston d'actionnement (16a) qui est fonctionnellement connecté à ladite au moins une desdites barres de thermoscellage (7) au moyen d'une tige respective (16b), lesdits moyens de connexion électrique indépendante (14) s'étendant, au moins en partie, sensiblement le long de ladite tige (16b), ladite tige (16b) dudit premier actionneur linéaire (16) comprenant au moins deux parties électriquement conductrices (19, 20) qui sont électriquement isolées l'une de l'autre, respectivement au moins une première partie électriquement conductrice (19) et au moins une deuxième partie électriquement conductrice (20), ladite première partie électriquement conductrice (19) étant connectée électriquement à l'un desdits connecteurs d'entrée électriques (12, 13) et à l'une desdites résistances électriques (9, 10), ladite au moins une deuxième partie électriquement conductrice (20) de ladite tige (16b) étant connectée électriquement à l'autre connecteur d'entrée électrique (12, 13) et à l'autre résistance électrique (9, 10).

2. La machine d'emballage sous vide selon la revendication 1, **caractérisée en ce que** lesdits moyens de connexion électrique indépendante (14) sont configurés pour connecter électriquement chacun desdits connecteurs d'entrée électriques (12, 13) à une première extrémité (9a, 10a) de la résistance électrique respective (9, 10), lesdites résistances électriques (9, 10) étant chacune connectées électriquement, à une deuxième extrémité (9b, 10b), opposée à ladite première extrémité (9a, 10a), à un connecteur de sortie électrique unique (18).

3. La machine d'emballage sous vide selon la revendication 1, **caractérisée en ce que** ladite au moins une première partie électriquement conductrice (19) de ladite tige (16b) dudit premier actionneur linéaire (16) s'étend sensiblement le long de l'axe de ladite tige (16b), ladite au moins une deuxième partie électriquement conductrice (20) étant disposée coaxialement autour de ladite au moins une première partie électriquement conductrice (19).

4. Machine d'emballage sous vide selon la revendication 1, **caractérisée en ce que** ladite première partie électriquement conductrice (19) de ladite tige (16b) comprend au moins un corps central en forme de tige (19a) qui s'étend le long de l'axe de ladite tige (16b), ladite deuxième partie électriquement conductrice (20) de ladite tige (16b) comprenant au moins un corps en forme de manchon (20a) disposé autour dudit corps central en forme de tige (19a).

5. La machine d'emballage sous vide selon la revendication 1, **caractérisée en ce que** lesdites parties électriquement conductrices (19, 20) de ladite tige (16b) sont chacune connectées électriquement à au moins un élément de contact d'entrée électrique respectif (22, 23), qui est solidaire de ladite barre de thermoscellage (7) et connecté électriquement à une résistance électrique correspondante (9, 10).

6. La machine d'emballage sous vide selon la revendication 1, **caractérisée en ce que** ladite première partie électriquement conductrice (19) de ladite tige (16b) est connectée électriquement, à une extrémité axiale de celle-ci, au connecteur d'entrée électrique correspondant (12, 13) et, à l'autre extrémité axiale de celle-ci, est en contact avec une plaque de contact électrique électriquement conductrice (25), qui est chargée élastiquement contre ladite première partie électriquement conductrice (19).

7. La machine d'emballage sous vide selon la revendication 1, **caractérisée en ce que** ladite deuxième partie électriquement conductrice (20) est connectée, à l'une de ses extrémités axiales, au connecteur d'entrée électrique correspondant (12, 13), et est, sensiblement à son extrémité axiale opposée, en relation de contact électrique avec un premier bloc de connexion (31), qui est solidaire de ladite barre de thermoscellage (7) et est traversé avec du jeu par ladite première partie électriquement conductrice (19).

8. La machine d'emballage sous vide selon la revendication 2, **caractérisée en ce que** lesdits moyens de déplacement (15) pour déplacer ladite barre de thermoscellage (7) comprennent au moins un deuxième actionneur linéaire (38) qui est disposé à distance dudit au moins un premier actionneur linéaire (16) le long de l'axe de ladite barre de thermoscellage (7), ledit au moins un deuxième actionneur linéaire (38) ayant un piston d'actionnement respectif (38a) et une tige respective (38b) qui est reliée de manière fonctionnelle à ladite barre de thermoscellage (7), la tige (38b) dudit au moins un deuxième actionneur linéaire (38) étant électriquement conductrice et étant reliée, sensiblement à une extrémité de celle-ci, à la deuxième extrémité (9b, 10b) desdites deux résistances électriques (9, 10).
